(19) Europäisches Patentamt / European Patent Office / Office européen des brevets

(11) **EP 4 296 636 B1**

(12) **EUROPÄISCHE PATENTSCHRIFT**

(45) Veröffentlichungstag und Bekanntmachung des Hinweises auf die Patenterteilung:
**09.04.2025 Patentblatt 2025/15**

(21) Anmeldenummer: **23178626.0**

(22) Anmeldetag: **12.06.2023**

(51) Internationale Patentklassifikation (IPC):
*G01J 3/02* (2006.01)   *G01N 21/27* (2006.01)
*G01N 21/35* (2014.01)   *G01J 3/28* (2006.01)

(52) Gemeinsame Patentklassifikation (CPC):
*G01J 3/28; G01J 3/0235; G01J 3/0286;*
G01N 21/274; G01N 2201/1211

(54) **VERFAHREN ZUR VORKALIBRIERUNG UND ZUR KORREKTUR VON MESSFEHLERN EINER SPEKTROSKOPISCHEN MESSVORRICHTUNG SOWIE MESSVORRICHTUNG**

METHOD FOR PRE-CALIBRATION AND CORRECTION OF MEASUREMENT ERRORS OF A SPECTROSCOPIC MEASUREMENT DEVICE, AND MEASUREMENT DEVICE

PROCÉDÉ DE PRÉ-ÉTALONNAGE ET DE CORRECTION D'ERREURS DE MESURE D'UN DISPOSITIF DE MESURE SPECTROSCOPIQUE ET DISPOSITIF DE MESURE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **21.06.2022 DE 102022115363**

(43) Veröffentlichungstag der Anmeldung:
**27.12.2023 Patentblatt 2023/52**

(73) Patentinhaber: **Carl Zeiss Spectroscopy GmbH**
**07745 Jena (DE)**

(72) Erfinder:
• **Westphal, Peter**
**07743 Jena (DE)**
• **Bublitz, Daniel**
**07646 Rausdorf (DE)**
• **Lindig, Karsten**
**99084 Erfurt (DE)**

(74) Vertreter: **Engel, Christoph Klaus**
**PATENTSCHUTZengel**
**Marktplatz 6**
**98527 Suhl (DE)**

(56) Entgegenhaltungen:
DE-A1- 102004 021 448   DE-B3- 102018 103 509
US-B2- 10 139 275

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Vorkalibrierung einer spektroskopischen Messvorrichtung sowie ein Verfahren zur Korrektur von Messfehlern, welche vor allem durch Temperaturdrift und/oder Bauteilverschleiß (Strahlungsquellendrift, Komponentenalterung) in einer solchen Messvorrichtung entstehen. Weiterhin betrifft die Erfindung eine Messvorrichtung zur spektroskopischen Inhaltsstoffanalyse, welche das erfindungsgemäße Verfahren zur Korrektur auftretender Messfehler anwenden kann.

Die hier betroffene Messvorrichtung ist insbesondere zur spektroskopischen Inhaltsstoffanalyse zur Bestimmung von Inhaltsstoffen einer Probe, insbesondere eines Schüttgutes geeignet. Die Inhaltsstoffanalyse ist bevorzugt in der Landwirtschaft und in der Lebensmittelindustrie einsetzbar.

Gattungsgemäße Messvorrichtungen benötigen einen Sensor, welcher die am Messobjekt gebeugte Strahlung detektiert.

Die EP 3 152 785 B1 zeigt ein Verfahren zur Detektion infraroter elektromagnetischer Strahlung sowie ein optoelektronisches Bauelement zur Detektion eines elektromagnetischen Signals im Wellenlängenbereich von 780 nm bis 10 μm. Das optoelektronische Bauelement ist auf einem Substrat angeordnet und umfasst zwei voneinander beabstandete, gegenüberliegende Spiegelflächen sowie eine dazwischen angeordnete photoaktive Schicht. Die EP 3 152 785 B1 beschreibt weiterhin, dass Detektoren häufig mit einer extern angelegten Spannung betrieben werden, um eine höhere externe Quanteneffizienz im Detektionsbereich zu erhalten.

Grundsätzlich sind organische Photodioden bekannt, die typischerweise eine photosensitive, organische Schicht aufweisen, die in einem optischen Resonator platziert ist, sodass eine wellenlängenselektive, organische Photodiode entsteht. Werden mehrere verschiedene organische Photodioden mit angepassten optischen Resonatoren für unterschiedliche Wellenlängen verwendet, lässt sich ein spektroskopischer Sensor aufbauen, der in entsprechenden Messvorrichtungen nutzbar ist.

In der WO 2016/055047 A1 ist eine Vorrichtung zur spektrometrischen Erfassung von Licht mit einer Photodiode, die monolithisch in die Schichtstruktur eines wellenlängenselektiven Filters integriert ist, beschrieben. Die Photodiode weist folgende Detektorschichten auf: eine photoaktive Schicht, eine erste Elektrode und eine zweite Elektrode.

Aus der DE 10 2014 014 983 A1 ist ein optisches Filterelement für spektroskopische bzw. spektrometrische Einrichtungen zur Umwandlung von spektralen Informationen in Ortsinformationen bekannt. Dem Filterelement ist ein Detektor zugeordnet. Auf einer Oberfläche eines Substrats des Filterelements ist ein Mikroresonator angeordnet. Weiterhin weist das Filterelement Schichtstrukturen und Resonatorschichten auf.

Die DE 10 2019 102 176 A1 zeigt ein hybrides multispektrales Bauelement, welches ein Substrat und mindestens ein erstes und ein zweites Funktionselement zur Detektion umfassen.

In der DE 10 2019 113 346 A1 ist ein optoelektronisches Bauelement beschrieben, welches ein Substrat, eine erste und eine zweite Elektrode sowie eine erste und eine zweite reflektierende Fläche aufweist.

Als thermische Drift bzw. Temperaturdrift wird eine ungewollte zeitliche Veränderung im Verhalten eines Bauelements oder Geräts durch Einwirkung der Temperatur verstanden. Dieses Verhalten tritt auch bei spektroskopischen Messvorrichtungen, insbesondere bei deren Lichtquelle und/oder dem verwendeten Sensor auf. Gleichzeitig ist für spektroskopische Messvorrichtungen eine sehr hohe Messgenauigkeit gefordert, sodass Verfälschungen der Messdaten durch Temperaturdrift und/oder Bauteilverschleißprozesse unerwünscht sind und für präzise Messergebnisse langfristig vermieden bzw. minimiert werden müssen. Für solche Einsatzfälle werden daher üblicherweise Bauteile, einschließlich der Photosensoren, ausgewählt, die eine sehr geringe Temperaturdrift aufweisen. Die Problematik der Drift, beispielsweise von Lasern, ist auch aus der EP 3 633 352 A1 bekannt. Es wird dort beschrieben, dass der Einfluss der Außentemperatur oder die Alterung des Lasers bzw. der Elektronik zum Drift beitragen. Eine Temperaturkorrektur des erfassten Betriebsparameters kann beispielsweise in einer Rechnereinheit mittels eines darin gespeicherten Programms durchgeführt werden, was den technischen Aufwand jedoch erhöht und die Schnelligkeit der Messung reduzieren kann.

In der Dissertation "Entwicklung und Charakterisierung von organischen Photodetektoren" beschreibt E. S. Zaus (2007; Friedrich-Alexander-Universität Erlangen-Nürnberg) anorganische und organische Halbleiter. Aus der Dissertation lässt sich entnehmen, dass organische Photodioden beispielsweise in einem Temperaturbereich von 5°C bis 80°C einsetzbar sind, aber dabei verschiedene temperaturabhängige Strom-Spannungskennlinien im Dunkeln und unter Beleuchtung aufweisen. So kann der Signalstrom aufgrund der Temperaturänderung um etwa 10% abweichen. Dieses Phänomen, welches bei einem Sensor auftritt, wird ebenfalls als Temperaturdrift bezeichnet.

Aus der DE 10 2004 025 448 A1 sind ein Verfahren zum Messen eines Spektrums einer Messprobe mittels eines Infrarot-Spektrometers und ein derartiges Infrarot-Spektrometer bekannt. Das Spektrometer weist eine Komponente auf, deren Betriebsverhalten zumindest von einem Betriebsparameter beeinflusst wird. Dieser Betriebsparameter wird während der Messung zumindest einmal erfasst, das Betriebsverhalten der Komponente wird in Abhängigkeit des erfassten Betriebsparameters auf einen vorbestimmten Referenzwert des Betriebsparameters rückgerechnet und das erfasste Spektrum wird entsprechend korrigiert. Soweit der Betriebsparameter die Temperatur ist, soll damit das Erfordernis entfallen, das Spektrometer in einer speziell konditionierten, insbesondere klimatisierten Umgebung zu betreiben, sodass das Spektrometer in einer üblichen Laborumgebung betrieben werden kann.

Die WO 2019/072729 A1 beschreibt ein mobiles Inhaltsstoffanalysesystem sowie ein Verfahren zur probenrichtigen Messung mit diesem System. Das beschriebene Verfahren sieht u.a. die folgenden Verfahrensschritte vor: Auswahl eines zu einer zu untersuchenden Probe passenden Kalibrationsprodukts sowie die Durchführung einer Plausibilitätsprüfung des gewählten Kalibrationsprodukts. Wird eine fehlerhafte Auswahl des Kalibrationsprodukts ermittelt, wird die Auswahl eines alternativen Kalibrationsprodukts initiiert. Als weiterer Verfahrensschritt erfolgt die Ausgabe von einzuhaltenden Messbedingungen, nämlich einem Messpunkt und einer Messdauer, in Abhängigkeit vom gewählten Kalibrationsprodukt. Weiterhin werden Messwerte an der Probe erfasst, wobei die Messbedingungen überwacht werden.

In der WO 2019/072729 A1 wird die EP 1 740 928 B1 zitiert, welche ein Verfahren zur Rekalibrierung eines spektrometrischen Messkopfes betrifft. Im Rekalibrierungsverfahren kommen interne und externe Referenzierungen, welche in den Strahlengang des Messkopfes geschwenkt werden, zum Einsatz.

Die DE10 2018 103 509 B3 beschreibt ein Verfahren zur probenrichtigen Messung mit einem mobilen Inhaltsstoffanalysesystem, welches ein Gehäuse mit Fenster, eine Schnittstelle für eine externe Referenzeinheit, eine Anzeige- und Bedieneinheit, eine Lichtquelle, ein optisches Spektrometer, eine Kamera, eine interne Referenzeinheit und eine elektronische Steuereinheit aufweist. Das Verfahren umfasst folgende Schritte: Auswahl eines zu einer zu untersuchenden Probe passenden Kalibrationsproduktes; Plausibilitätsprüfung des gewählten Kalibrationsproduktes, wobei eine fehlerhafte Auswahl signalisiert und eine erneute Auswahl eines alternativen Kalibrationsproduktes initiiert wird; Ausgabe von einzuhaltenden Messbedingungen, die den zu wählenden Messpunkt und die Messdauer umfassen, in Abhängigkeit vom ausgewählten Kalibrationsprodukt; Erfassen von Messwerten an der Probe mittels Spektrometer unter den Messbedingungen und unter gleichzeitiger Überwachung der Messbedingungen; Verarbeitung der erfassten Messwerte durch eine elektronische Steuereinheit, wobei jeder Messwert als gültig erklärt wird, der unter Einhaltung der Messbedingungen erfasst wurde; Ausgabe mindestens der für gültig befundenen Messwerte an der Anzeige- und Bedieneinheit oder einem anderen Ausgabe- oder Speicherelement.

Aus der DE 10 2004 021 448 A1 ist eine Lösung zum Messen der diffusen Reflexion von Proben bekannt, insbesondere in der Prozessmesstechnik. Ein spektrometrischer Reflexionsmesskopf mit interner Rekalibrierung besteht aus einem mit einem Fenster versehenen Gehäuse, in dem eine Beleuchtungsquelle und eine Optikbaugruppe zum Sammeln und Einkoppeln des Messlichtes in einen Lichtleiter angeordnet sind. Das Gehäuse besitzt Verbindungen zu einer Spannungsquelle, einer Steuer- und Auswerteeinheit sowie einem Spektrometer. Im Gehäuse sind zusätzlich mindestens zwei Standards zur internen Rekalibrierung vorhanden, die wahlweise in den Strahlengang des Reflexionsmesskopfes zur Erfassung der Messdaten für die Rekalibrierung geschwenkt werden können.

Speziell im Bereich der Inhaltsstoffanalyse soll die Messgenauigkeit regelmäßig im Bereich von etwa 0,1% liegen. Soll die Inhaltsstoffanalyse mittels Spektrometer erfolgen, erscheint der Einsatz organischer Photodioden aufgrund deren großer Temperaturdrift daher ausgeschlossen. Um die geforderte Messgenauigkeit zu erreichen und einem großen Temperaturdrift entgegenzuwirken, wäre eine Temperaturregelung am spektroskopischen Messmodul denkbar. Diese Lösung wäre allerdings sehr aufwändig und für den industriellen Einsatz kaum realisierbar, da sie innerhalb einer Toleranz von 0,01°C genau regeln muss. Die in entsprechenden Anordnungen aufgrund vergleichsweise geringer Temperaturdrift tolerierbare Temperaturänderung liegt für anorganische InGaAs-Detektoren bei etwa 2 K. Hingegen würde in vergleichbaren Analyseanordnungen bei der Verwendung organischer Photodioden die tolerierbare Temperaturänderung aufgrund deutlich größerer Temperaturdrift nur noch bei etwa 25 mK liegen. Somit ist die insbesondere in Inhaltsstoffanalyseanordnungen tolerierbare Temperaturänderung für polymerbasierte Spektralsensoren bzw. organische Photodioden etwa 80fach kleiner als bei InGaAs-Sensoren. Folgerichtig hat die Fachwelt auf den Einsatz organischer Photodioden in derartigen Anwendungen bislang konsequent verzichtet.

Eine Aufgabe der vorliegenden Erfindung besteht ausgehend vom Stand der Technik darin, ein verbessertes Verfahren zur Kompensation bzw. Korrektur der Temperaturdrift und/oder von auftretendem Bauteilverschleiß bei spektroskopischen Messvorrichtungen zur Verfügung zu stellen. Insbesondere soll die Erfindung dadurch den Einsatz organischer Photodioden in spektroskopischen Messvorrichtungen, speziell für die Inhaltsstoffanalyse ermöglichen, der bislang aufgrund großer Temperaturdrift als ausgeschlossen galt. Weiterhin ist es eine Aufgabe der vorliegenden Erfindung, eine spektroskopische Messvorrichtung mit einer organischen Photodiode sowie verbesserter Korrektur der Messwerte bereitzustellen, welche insbesondere das zuvor genannte Verfahren ausführen kann.

Diese Aufgabe wird durch ein erfindungsgemäßes Verfahren zur Vorkalibrierung einer spektroskopischen Messvorrichtung gemäß Anspruch 1 bzw. durch ein Verfahren zur Korrektur von Messfehlern gemäß dem beigefügten Anspruch 2 sowie durch eine spektrale Messvorrichtung gemäß dem nebengeordneten Anspruch 5 gelöst.

Das erfindungsgemäße Verfahren dient der Korrektur von Messfehlern, welche durch Temperaturdrift und/oder Bauteilverschleiß an einer spektroskopischen Messvorrichtung, insbesondere an dem dort eingesetzten Photosensor entstehen. Die spektroskopische Messvorrichtung dient bevorzugt der berührungslosen Inhaltsstoffanalyse einer Probe und umfasst eine Steuereinheit, eine Lichtquelle sowie einen Probenhalter zur Aufnahme der zu messenden bzw.

analysierenden Probe. Der Probenhalter ist im Strahlengang der Lichtquelle angeordnet. Weiterhin umfasst die Messvorrichtung ein spektrales Messmodul mit mindestens einem Photosensor. Der Photosensor wird durch ein Substrat gebildet, auf dem mindestens eine organische Photodiode angeordnet bzw. ausgebildet ist. Es können eine einzige organische Photodiode, alternativ zwei oder mehr organische Photodioden auf dem Substrat angeordnet sein. Weiterhin umfasst das Messmodul einen Temperatursensor, welcher an dem Photosensor angeordnet ist, wobei eine sehr gute thermische Kopplung mit dem Photosensor sicherzustellen ist. Der Temperatursensor dient dem Erfassen einer absoluten Temperatur am Photosensor sowie eines zeitlichen Temperaturgradienten.

Organische Photodioden gehören zum Gebiet der sogenannten Polymerelektronik. Ein für die hier betroffenen spektroskopischen Messungen eingesetzter Photosensor kann 2 bis 2000 (oder mehr) organische Photodioden umfassen. Bevorzugt umfasst der Photosensor 3 bis 200 organische Photodioden. Besonders bevorzugt umfasst der Photosensor 4 bis 100 organische Photodioden. Jeder Photodiode ist ein Spektralkanal zugeordnet. Die Photodioden sind vorzugsweise auf einem Substrat angeordnet, wobei sie eine gemeinsame Anode oder eine gemeinsame Kathode aufweisen. Alternativ können die Photodioden jeweils auf einem einzelnen Substrat separat angeordnet sein, wobei die Photodioden dann einzeln elektronisch kontaktiert sind.

Die organische Photodiode weist eine organische Schicht auf, wobei die organische Schicht eine Schichtdicke im nm-Bereich bis $\mu$m-Bereich besitzt. Neben der organischen Schicht umfasst die Photodiode zwei reflektierende oder teilreflektierende Grenzflächen, zwischen denen die organische Schicht angeordnet ist. Die Grenzflächen bilden einen Interferenzfilter, dessen Wirkung durch den Abstand zwischen den beiden Grenzflächen sowie die optoelektronischen Eigenschaften der organischen Schicht begrenzt ist. Die Wellenlänge, für die die Photodiode sensitiv ist, ist durch den Abstand der beiden Grenzflächen der jeweiligen Photodiode definiert.

Das erfindungsgemäße Verfahren verwendet Kalibrier- und Referenzwerte, die in einem Verfahrensabschnitt der Vorkalibrierung gewonnen werden. Gemäß einer bevorzugten Ausführungsform kann das erfindungsgemäße Verfahren vorgelagert zum Verfahrensabschnitt der Probenmessung einen Verfahrensabschnitt der Vorkalibrierung umfassen. Die Vorkalibrierung wird regelmäßig vom Hersteller der Vorrichtung ausgeführt und muss vom Anwender nur von Zeit zu Zeit erneut ausgeführt werden, wenn dieser Abschnitt erneut benötigt wird. Im normalen Betrieb ist somit nur der Verfahrensabschnitt der Probenmessung auszuführen.

Während der Vorkalibrierung sieht das Verfahren vor, dass Kalibrierwerte an einem Messort und Referenzwerte in einer zum Messort versetzten Referenz-Messebene (bezogen auf den Strahlengang des Messlichts) bestimmt werden, unter Nutzung einer Kalibrierprobe bzw. einer Referenzprobe. Die Kalibrierprobe kann auch als externe Probe (da sie bevorzugt nur zu Kalibrierzwecken in die Messvorrichtung eingebracht wird) und die Referenzprobe als interne Probe (da sie bevorzugt als Referenz in der Messvorrichtung vorgehalten wird) bezeichnet werden. Die Kalibrierwerte und die Referenzwerte werden in der Steuereinheit hinterlegt bzw. gespeichert. Der Messort befindet sich am Probenhalter, wobei der Probenhalter, wie zuvor beschrieben, im Strahlengang der Lichtquelle liegt.

An dem Messort wird in einem Verfahrensschritt des späteren Verfahrensabschnitts der Probenmessung auch die zu messende Probe platziert. Die Referenz-Messebene ist versetzt zum Messort angeordnet und liegt ebenfalls im Strahlengang. Beispielsweise kann der Abstand zwischen der Referenz-Messebene und dem Messort zwischen 0,5 cm und 5 cm sein. Bevorzugt ist der Abstand zwischen der Referenz-Messebene und dem Messort zwischen 1 cm und 3 cm. Der Versatz bzw. der Abstand zwischen der Referenz-Messebene und dem Messort ist vorteilhaft, da eine Probe am Messort nicht entfernt werden muss, wenn eine Referenzmessung erfolgt, da die Referenzmessung in der Referenz-Messebene stattfindet. Der Versatz zwischen der Referenz-Messebene und dem Messort wird durch die Verfahrensschritte der Vorkalibrierung berücksichtigt. Der Abstand zwischen der Referenz-Messebene und der Lichtquelle ist bevorzugt kleiner als der Abstand zwischen dem Messort und der Lichtquelle. Alternativ kann der Abstand zwischen der Referenz-Messebene und der Lichtquelle größer sein als der Abstand zwischen dem Messort und der Lichtquelle. Es ist aber auch denkbar, dass der Messort und die Referenz-Messebene in der gleichen Ebene liegen, was gegebenenfalls einen Mehraufwand für den Anwender bedeutet.

Für das Verfahren sind während der Probenmessung nachfolgende Verfahrensschritte vorgesehen.

In einem ersten Verfahrensschritt wird mittels des Temperatursensors eine Ist-Temperatur des spektralen Messmoduls, insbesondere des Photosensors ermittelt. Die Ist-Temperatur wird an die Steuereinheit übermittelt. Vorzugsweise kann die Ist-Temperatur des Photosensors vor, während und/oder nach jeder spektroskopischen Messung erfasst werden. Hierbei kann die Ist-Temperatur einfach oder zur Messwertmittelung mehrfach gemessen werden.

In einem weiteren Verfahrensschritt wird eine Dunkel-Referenzprobe in den Strahlengang der Lichtquelle eingeschwenkt, sodass die Dunkel-Referenzprobe in der Referenz-Messebene liegt. Anschließend wird mittels des Photosensors ein Dunkel-Referenzwert gemessen, wobei die von der Dunkel-Referenzprobe abgelenkte (gestreute bzw. reflektierte) Strahlung von dem Photosensor erfasst wird. Es erfolgt eine spektrale Messung. Der Dunkel-Referenzwert wird an die Steuereinheit übermittelt. Die abgelenkte Strahlung wird durch Beugung oder Reflexion von emittierter Strahlung der Lichtquelle an der Referenzprobe bzw. nachfolgend an der zu messenden Probe erzeugt.

In einem weiteren Verfahrensschritt wird eine Hell-Referenzprobe in den Strahlengang der Lichtquelle eingeschwenkt, sodass die Hell-Referenzprobe in der Referenz-Messebene liegt. Anschließend wird mittels des Photosensors

EP 4 296 636 B1

ein Hell-Referenzwert gemessen, wobei die von der Hell-Referenzprobe abgelenkte Strahlung von dem Photosensor erfasst wird. Der Hell-Referenzwert wird an die Steuereinheit übermittelt.

Die Dunkel-Referenzprobe weist eine besonders geringe Reflektivität auf. Dunkel-Referenzproben sind dem Fachmann bekannt.

Die Hell-Referenzprobe weist eine besonders hohe Reflektivität auf. Hell-Referenzproben sind als zertifizierte Referenzproben erhältlich und sie sind dem Fachmann bekannt. Außer den beiden Referenzproben, nämlich der Dunkel-Referenzprobe und der Hell-Referenzprobe, können weitere Arten von Referenzproben verwendet werden, wobei die Verfahrensschritte ähnlich den Schritten mit der Referenzprobe auszuführen sind.

Ein weiterer Verfahrensschritt sieht vor, dass durch die Steuereinheit unter Verwendung der aus der Vorkalibrierung in der Steuereinheit hinterlegten Kalibrier- und Referenzwerte, einem Dunkelstromsignal, sowie aus dem gemessenen Dunkel-Referenzwert und dem Hell-Referenzwert unter Beachtung der erfassten Ist-Temperatur am Photosensor eine Korrekturberechnung erfolgt. Um die Korrekturberechnung durchzuführen, können in der Steuereinheit eine temperaturabhängige Messkurve und/oder eine Funktion zur Korrekturberechnung unter Verwendung der zuvor genannten Werte abgelegt sein.

In einem weiteren Verfahrensschritt wird die zu messende bzw. zu untersuchende Probe am oder auf dem Probenhalter platziert, sodass die Probe am Messort liegt. Anschließend erfolgt eine spektrale Messung der von der Probe abgelenkten Strahlung durch den Photosensor, wobei ein Spektralwert der Probe bestimmt wird. Die Probe kann bereits am Messort befindlich sein, wenn die Messungen mit der Dunkel-Referenzprobe und/oder der Hell-Referenzprobe erfolgt, da sie in einer anderen Ebene platziert wird.

Die Probe ist vorzugsweise ein fester Stoff, insbesondere ein Schüttgut. Alternativ kann die Probe durch eine Flüssigkeit gebildet sein. Andere Stoffe sind als Probe denkbar. Besonders bevorzugt ist die zu messende Probe ein landwirtschaftliches Erzeugnis, beispielsweise gehäckselter Mais, Getreide, Silage, Heu, Stroh, Fleisch, Käse, Milch, Wolle, Baumwolle. Somit können Inhaltstoffe und Parameter von vorzugsweise organischen Substanzen bzw. Proben bestimmt werden. Beispielsweise können die zu bestimmenden Inhaltsstoffe/Parameter sein: Feuchte, Protein, Rohfaser, Stärke, Zucker. Die Messung erfolgt über Reflexions- oder Absorptions-Spektroskopie mittels der spektroskopischen Messvorrichtung.

Ein weiterer Verfahrensschritt sieht vor, dass der gemessene Spektralwert der Probe durch die Korrekturberechnung korrigiert wird, sodass ein korrigierter bzw. finaler Messwert erhalten wird. Der korrigierte Messwert ist vorteilhafterweise von temperaturbedingten, systematischen Störeinflüssen bereinigt.

Da für die Korrekturberechnung sowohl die Temperatur als auch die Ist- und Soll-Werte mittels der Kalibrierproben und Referenzproben betrachtet werden, hat das erfindungsgemäße Verfahren den Vorteil, dass Störgrößen, welche in der spektralen Messvorrichtung durch Temperaturänderungen oder beispielsweise durch Alterungsprozesse der Lichtquelle auftreten, herausgerechnet bzw. kompensiert werden. Temperaturabhängige Störgrö-ßen schlagen sich vor allem nieder in Dunkelsignal, Dunkelsignaldrift und Hellsignaldrift.

Vorzugsweise umfasst die Vorkalibrierung, die zumindest bei einer Initialisierung des Gerätes, bevorzugt vom Hersteller ausgeführt wird, mindestens einen der nachfolgenden Verfahrensschritte. Durch die Vorkalibrierung werden die spezifischen Verhaltensweisen des Photosensors bei unterschiedlichen Temperaturen präzise erfasst. Dies gestattet es erstmals, auch in Anwendungen mit hohen Genauigkeitsanforderungen auf organische Photodioden zu

Während der Vorkalibrierung wird in einem ersten Verfahrensschritt eine Hell-Kalibrierprobe am Messort angeordnet. Ein Hell-Kalibrierwert wird bestimmt, indem von der Hell-Kalibrierprobe abgelenkte Strahlung mittels des Photosensors erfasst wird.

Während der Vorkalibrierung wird in einem weiteren Verfahrensschritt eine Dunkel-Kalibrierprobe am Messort angeordnet. Ein Dunkel-Kalibrierwert wird bestimmt, indem von der Dunkel-Kalibrierprobe abgelenkte Strahlung mittels des Photosensors erfasst wird. Die Dunkel-Kalibrierprobe ist vorzugsweise gleichartig zu der Dunkel-Referenzprobe. Besonders bevorzugt kann eine Dunkel-Kalibriermessung ohne eine Dunkel-Kalibrierprobe am Messort oder bei ausgeschalteter Lichtquelle erfolgen, sodass das Auftreten von Streulicht verhindert wird. Alternativ ist die Dunkel-Kalibrierprobe eine Strahlfalle. Es wird daran erinnert, dass der Messort seine Position im Strahlengang des Messstrahls nicht verändert, sodass die Kalibrierproben während der Vorkalibrierung dieselbe Position einnehmen wie die später zu messenden Proben.

Ein weiterer Verfahrensschritt der Vorkalibrierung sieht vor, dass eine Hell-Referenzprobe in der Referenz-Messebene angeordnet wird. Ein Hell-Referenzwert wird bestimmt, indem von der Hell-Referenzprobe abgelenkte Strahlung mittels des Photosensors erfasst wird. Die Hell-Referenzprobe, welche für die Vorkalibrierung verwendet wird, ist bevorzugt die gleiche Hell-Referenzprobe, welche später während der Probenmessung zur Anwendung kommt.

Ein weiterer Verfahrensschritt der Vorkalibrierung sieht vor, dass eine Dunkel-Referenzprobe in der Referenz-Messebene angeordnet wird. Ein Dunkel-Referenzwert wird bestimmt, indem von der Dunkel-Referenzprobe abgelenkte Strahlung mittels des Photosensors erfasst wird. Die Dunkel-Referenzprobe, welche für die Vorkalibrierung verwendet wird, ist bevorzugt die gleiche Dunkel-Referenzprobe, welche für die Probenmessung zur Anwendung kommt.

In einem weiteren Verfahrensschritt der Vorkalibrierung wird ein Dunkelstromsignal bei ausgeschalteter Lichtquelle mittels des Photosensors erfasst.

Bezogen auf die gerätetechnische Ausgestaltung kann die Messung am Messort als externe Messung und die Messung in der Referenz-Messebene als interne Messung bezeichnet werden.

Die Verfahrensschritte der Vorkalibrierung unter Verwendung der Hell-Kalibrierprobe, der Dunkel-Kalibrierprobe, der Hell-Referenzprobe und der Dunkel-Referenzprobe, sowie die Bestimmung des Dunkelstromsignals werden bei der gleichen Temperatur durchgeführt, wobei die Temperaturwerte mittels des Temperatursensors in unmittelbarer Nähe der den Photosensor bildenden organischen Photodioden erfasst werden und in der Steuereinheit z.B. als Wertetabelle oder in der Art einer die Werte beschreibenden Funktion gespeichert werden.

In weiteren Verfahrensschritten werden die zuvor genannten Verfahrensschritte unter Verwendung der Hell-Kalibrierprobe, der Dunkel-Kalibrierprobe, der Hell-Referenzprobe und der Dunkel-Referenzprobe, sowie die Bestimmung des Dunkelstromsignals jeweils bei weiteren Temperaturwerten durchgeführt, sodass jeweilige Kalibrier- und Referenzwerte bei jeweils zugehörigen, definierten Temperaturen entlang einer vorbestimmten Temperaturkurve erfasst werden. Die Temperaturänderung kann in definierten Schritten stattfinden und wird mittels bekannter Verfahren und Einrichtungen für die spektrale Messvorrichtung erzeugt. Es wird vorzugsweise eine Temperaturrampe durchlaufen, wobei die zuvor genannten Verfahrensschritte der Vorkalibrierung ausgeführt werden. Die Temperaturänderung erfolgt vorzugsweise im Bereich des Photosensors, insbesondere im Messmodul. Bevorzugt wird die Temperaturänderung mittels einer Temperiereinheit, welche elektrische Heizelemente und/oder elektrische Kühlelemente umfasst, erreicht. Die Temperiereinheit ist bevorzugt am Messmodul angeordnet.

Alternativ können Kalibrier- und Referenzwerte, sowie das Dunkelstromsignal bei definierten Temperaturen in Temperaturschritten erfasst und weitere Kalibrier- und Referenzwerte, sowie das Dunkelstromsignal mittels Interpolation aus den erfassten Werten berechnet werden. Während der Vorkalibrierung erfasste Kalibrier- und Referenzwerte, sowie das Dunkelstromsignal werden in der Steuereinheit hinterlegt und bevorzugt miteinander verrechnet. Alternativ bevorzugt wird aus den in der Vorkalibrierung erfassten Kalibrier- und Referenzwerten, sowie dem Dunkelstromsignal eine temperaturabhängige, spektrale Korrekturfunktion erzeugt.

Die Verfahrensschritte der Vorkalibrierung werden bevorzugt für alle Spektralkanäle gleichzeitig durchgeführt, sodass zu jedem Spektralkanal Werte oder Korrekturfunktionen aus der Vorkalibrierung in der Steuereinheit abgelegt sind.

Bevorzugt werden die Verfahrensschritte der Vorkalibrierung für jeden Temperaturwert einmalig aufgenommen. Alternativ können die Verfahrensschritte der Vorkalibrierung für jeden Temperaturwert mehrmals erfasst werden.

Die Vorkalibrierung kann auch als Werkskalibrierung oder Selbstkalibrierung bezeichnet werden, da sie vorzugsweise im Werk, in welchem die Messvorrichtung erzeugt wird, durchgeführt wird.

Die Dunkel-Referenzprobe kann für das Verfahren der Vorkalibrierung durch eine Strahlfalle ersetzt werden. Alternativ kann ein durch die Dunkel-Referenzprobe erzeugbares Dunkelsignal bzw. der Dunkel-Referenzwert, welcher durch die Photodiode erfasst wird, durch Abdecken der Photodiode erzeugt werden, wobei keine abgelenkte Strahlung von der Dunkel-Referenzprobe auf die organische Photodiode trifft. Beispielsweise kommt eine opake Abdeckung zum Einsatz. Diese Ausführungsform ist insbesondere für die Verfahrensschritte der Probenmessung geeignet, kann aber auch für die Verfahrensschritte der Vorkalibrierung genutzt werden. Unter der Annahme, dass alle Photodioden einen gleichen temperaturabhängigen Dunkelstrom aufweisen, kann der durch die eine abgedeckte Photodiode erfasste Dunkel-Referenzwert für alle Photodioden angenommen werden. Vorzugsweise umfasst das Messmodul bei dieser Ausführungsform für alle Photodioden die gleiche Art Stromverstärker. Werden unterschiedliche Stromverstärker genutzt, muss dies bei der Korrekturberechnung berücksichtigt werden.

Zur Bestimmung des Dunkel-Referenzwertes können alternativ mehrere Photodioden abgedeckt werden.

Durch Erfassung von Dunkel-Referenzwerten für unterschiedliche Temperaturen kann eine Dunkel-Referenzwert-Kurve bzw. eine Dunkel-Signal-Kurve erzeugt werden, die vorzugsweise für jeden Spektralkanal bzw. jede Photodiode erfasst oder alternativ berechnet wird. Eine Berechnung ist vorteilhafter, weil die Erfassung der einzelnen Werte zeitaufwendig und mit großem technischem Aufwand verbunden ist. Die Kalibrierproben können in einer Ausführungsform gleichartig zu den Referenzproben sein.

Bei der Probenmessung werden die einzelnen Messungen für die Spektralkanäle bevorzugt simultan durchgeführt. Alternativ können die einzelnen Messungen für die Spektralkanäle in zeitlichen Abständen, die aber möglichst gering gehalten werden sollen, sequenziell aufgenommen werden. Alternativ bevorzugt werden die einzelnen Messungen für die Spektralkanäle simultan und sequenziell durchgeführt.

Bei einem weiteren Verfahrensschritt im Rahmen der Probenmessung wird der Inhaltsstoff der zu messenden Probe quantitativ bestimmt, wobei geeignete Berechnungsverfahren, wie z.B. multivariate Analysen oder Machine-Learning, zur Anwendung kommen.

Ein weiterer alternativer Verfahrensschritt sieht vor, dass, wenn bei einer gemessenen Temperaturänderung am Photosensor ein vorgegebenes Maximum überschritten wird, eine Warnmeldung ausgegeben und das Messverfahren abgebrochen wird. Liegt die gemessene Temperaturänderung bei nachfolgenden Temperaturmessungen unterhalb des Maximums, wird das Messverfahren neu gestartet.

Die erfindungsgemäße Messvorrichtung ist dazu ausgebildet das zuvor beschriebene erfindungsgemäße Verfahren zur Vorkalibrierung und/oder das Verfahren zur Korrektur von Messfehlern auszuführen. Die beiden Verfahren können unmittelbar nacheinander oder zeitlich getrennt voneinander ausgeführt werden. Die Messvorrichtung umfasst ein Gehäuse, in welchem eine Steuereinheit, eine Lichtquelle, ein Probenhalter und ein spektrales Messmodul angeordnet sind, wobei das Messmodul mindestens einen Photosensor mit mindestens einer, vorzugsweise mehreren auf einem Substrat angeordneten organischen Photodiode(n) und mindestens einen Temperatursensor besitzt. Das Gehäuse dient dem Schutz der darin befindlichen Komponenten vor mechanischen, chemischen, optischen, elektromagnetischen und thermischen Störeinflüssen.

Weiterhin umfasst die Messvorrichtung bevorzugt einen Thermokörper, der in dem Messmodul unmittelbar an dem Photosensor angeordnet ist um Wärme, welche durch den Photosensor erzeugt wird, abzuleiten. Der Thermokörper weist eine hohe Wärmekapazität und eine hohe Wärmeleitfähigkeit auf und ist bevorzugt aus Aluminium oder Kupfer. Vorzugsweise ist der Thermokörper thermisch mit dem Substrat des Photosensors verbunden.

Vorteilhafterweise besteht das Substrat des Photosensors, auf welchem die Photodioden angeordnet sind, aus einem Material mit einer hohen Wärmeleitfähigkeit, um Wärme abzuleiten. Die Wärmeleitfähigkeit des Substrats beträgt vorzugsweise mindestens 5 W/(m*K). Beispielsweise besteht das Substrat aus Diamant, Saphir, Silizium oder Germanium, welche eine kristalline Struktur aufweisen. Alternativ können Metalle oder Halbleiter als Substratmaterial zur Anwendung kommen, wobei diese eine elektrische Isolierschicht umfassen. Das Substrat ist vorzugsweise transparent oder opak für Messstrahlung.

Der Temperatursensor ist bevorzugt unmittelbar an dem Photosensor angeordnet. Alternativ ist der Temperatursensor mittelbar an dem Photosensor angeordnet, wobei er beispielsweise an dem Thermokörper angeordnet ist. Umfasst der Photosensor eine hohe Anzahl an organischen Photodioden, sodass ein Temperaturunterschied zwischen diesen bestehen könnte, so umfasst das Messmodul bevorzugt mehrere Temperatursensoren, welche beabstandet zueinander und jeweils nah an den zugeordneten organischen Photodioden angeordnet sind.

In einer Ausführungsform, bei der jede Photodiode separat auf einem einzelnen Substrat angeordnet ist, ist vorzugsweise an jedem Substrat ein Temperatursensor angeordnet.

Vorzugsweise ist um die Einheit (Messmodul) aus Photosensor mit der mindestens einen organischen Photodiode, dem Temperatursensor und dem Thermokörper eine Abschirmung angeordnet, wobei die Abschirmung vor Umwelteinflüssen, wie elektrische oder magnetische Felder, abschirmen soll. Weiterhin dient die Abschirmung der Abschottung gegen optische Störstrahlung. Die Abschirmung ist beispielsweise aus Aluminium und weist eine gute Wärmeleitfähigkeit auf, um eine weitgehend homogene Temperatur innerhalb der Abschirmung bzw. des Messmoduls zu gewährleisten.

Bevorzugt ist im Strahlengang der gestreuten Strahlung an einer Eintrittsfläche der gestreuten Strahlung in das Messmodul oder in der Abschirmung des Messmoduls ein Spektralfilter zum Filtern von Spektralanteilen angeordnet. Beispielsweise ist der Spektralfilter ein Langpass oder ein Bandpass.

Gemäß einer bevorzugten Ausführungsform ist an der gegenüberliegenden Fläche zur Eintrittsfläche der gestreuten Strahlung in das Messmodul am Messmodul eine Temperiereinheit angeordnet.

Die Messvorrichtung umfasst vorzugsweise mehrere Optiken. Eine erste Optik ist eine Beleuchtungsoptik, welche im Strahlengang beabstandet zur Lichtquelle angeordnet ist und eine homogene Ausleuchtung gewährleistet. Eine zweite Optik ist eine Abbildungsoptik, die im Strahlengang der gestreuten Strahlung beabstandet zum Messmodul angeordnet ist und dazu dient, die gestreute Strahlung zu homogenisieren. Weiterhin dient die Abbildungsoptik dazu, spiegelnd reflektierte Strahlung, welche durch die Lichtquelle am Probenhalter entstehen kann, zu eliminieren, da diese Strahlung als Störstrahlung angesehen wird.

In einer Ausführungsform umfasst die Messvorrichtung eine Strahlfalle, welche der Unterdrückung von Störstrahlung dient. Die Strahlfalle weist an ihrer der Strahlung zugewandten Seite eine Oberfläche mit hoher Absorption auf. Vorzugsweise ist die Strahlfalle trichterförmig ausgebildet. Andere Formen, wie eine Gerade oder eine Wölbung sind denkbar.

Die Lichtquelle ist bevorzugt so gewählt, dass sie den Empfindlichkeitsbereich der organischen Photodiode abdeckt. Bevorzugt emittiert die Lichtquelle eine Strahlung im Infrarotbereich (IR) und/oder im nahen Infrarotbereich (NIR). Alternativ bevorzugt kann die Lichtquelle eine Strahlung im sichtbaren Bereich (VIS) emittieren. Eine gewählte Strahlung der Lichtquelle im ultravioletten Bereich (UV) ist alternativ denkbar. Vorzugsweise ist die Lichtquelle halbleiterbasiert mit mehreren spektralen Emissionslinien und besteht bevorzugt aus einem breitbandig emittierenden Leuchtstoff. Beispielweise kann die Lichtquelle aus folgenden Quellen gewählt werden: eine Halogenlampe, eine Bogenlampe, sonstige thermische Quellen, eine LED, eine SLD, ein Multi-Linien-Laser oder eine Superkontinuum-Quelle. Besonders bevorzugt emittiert die Lichtquelle im Wellenlängenbereich von 780 nm bis 20 $\mu$m.

Das Messmodul kann in abgewandelten Ausführungsformen mehrere Photosensoren umfassen.

Für ein besonders gutes Übertragungsverhalten sind mehrere Photodioden mit einem Stromverstärker gekoppelt. Besonders bevorzugt ist jeder Photodiode ein Stromverstärker zugeordnet. Vorzugsweise ist der Stromverstärker ein Transimpedanzwandler. Alternativ kann ein Stromintegrator als Stromverstärker genutzt werden.

In einer abgewandelten Ausführungsform sind weniger Stromverstärker als Photodioden im Messmodul angeordnet, sodass bevorzugt ein elektrischer Multiplexer im Messmodul angeordnet wird, der die Stromverstärker sequenziell mit den organischen Photodioden verbindet.

Vorzugsweise sind die Referenzproben auf Höhe der Referenz-Messebene in den Strahlengang einschwenkbar. Bevorzugt sind die Referenzproben als Bestandteil in der Messvorrichtung integriert, wobei sie beispielsweise mittels eines Hebels manuell oder mechanisch in den Strahlengang eingeschwenkt werden können. Alternativ stehen die Referenzproben dem Anwender bereit und können durch diesen in die Referenz-Messebene gebracht werden.

Der Probenhalter ist bevorzugt transparent ausgebildet. Bevorzugt ist der Probenhalter rotierbar, wobei er vorzugsweise während der Messung der Probe rotiert, sodass ein Mittelungswert für die gesamte auf dem Probenhalter positionierte Probe bestimmt wird. Die Rotation des Probenhalters kann durch einen Motor realisiert werden.

Vorzugsweise ist der Probenhalter so positioniert, dass die Probe durch die Schwerkraft an den Probenhalter gepresst wird. Alternativ kann die Probe mechanisch oder durch Zentrifugalkräfte an den Probenhalter gepresst werden.

Ein Vorteil der beschriebenen Messvorrichtung ist, dass aufgrund der Verwendung organischer Photodioden die Messvorrichtung kostengünstig herstellbar ist. Dies gilt insbesondere bei großen Stückzahlen. Ein weiterer Vorteil ist, dass die erfindungsgemäße Messvorrichtung zur Ausführung des erfindungsgemäßen Verfahrens ausgebildet ist, sodass Messfehler, welche Aufgrund von Temperaturdrift und/oder Bauteilverschleiß der Messvorrichtung auftreten, eliminiert werden können, um bessere Messergebnisse der Probe zu erhalten. Exakte Messergebnisse sind insbesondere im Bereich der Inhaltsstoffanalyse wichtig, bei der die Messgenauigkeit im Bereich von etwa 0,1% liegen soll.

Eine Korrektur einer Temperaturdrift für die Messvorrichtung ist vorteilhaft, da die Temperaturempfindlichkeit bzw. Temperaturabhängigkeit organischer Photodioden deutlich größer als die Temperaturempfindlichkeit anorganischer Photodioden ist. Vorteilhafterweise ist die Messvorrichtung zur Anwendung bei Arbeitstemperaturen von etwa 0°C bis 70°C ausgelegt.

Die Messvorrichtung ist in einer Ausführungsform als Tischgerät ausgebildet. In einer weiteren Ausführungsform ist die Messvorrichtung ein Handgerät, welches durch den Anwender gehalten werden kann. Auch ein robotergeführtes Gerät oder eine ferngesteuerte Drohne sind als Ausbildungen der Messvorrichtung denkbar.

Die Stromversorgung der Messvorrichtung erfolgt bevorzugt mittels eines Akkumulators. Alternativ kann die Messvorrichtung durch eine Netzsteckdose versorgt werden. Ebenso sind elektrische oder optische Schnittstellen zur Stromversorgung und zum Datenaustausch mit der Messvorrichtung zweckmäßig. Um einen Datenaustausch zu ermöglichen, kann die Messvorrichtung eine Komponente zur Erzeugung einer Funkverbindung umfassen. Vorzugsweise umfasst die Messvorrichtung Analog- und Digitalelektronik. In einer Ausführungsform umfasst die Messvorrichtung ein Anzeigegerät, beispielsweise ein Display, welches auch Bedienelemente aufweisen kann.

Die Messvorrichtung umfasst bevorzugt eine Temperiereinheit, welche der Änderung der Temperatur aller Komponenten des Messmoduls bzw. aller Komponenten innerhalb der Abschirmung dient und die Temperatur je nach Einstellung variiert. Als elektrische Heizelemente können Heizwiderstände zur Anwendung kommen. Zusätzliche Kühlelemente können durch thermoelektrische Kühler gebildet werden. Insbesondere kommt die Temperiereinheit für die Vorkalibrierung zum Einsatz. Eine Verwendung der Temperiereinheit während der Verfahrensschritte der Probenmessung ist möglich, aber im Regelfall nicht erwünscht, da dies mit einem hohen Arbeits- und Zeitaufwand einhergeht. In einer abgewandelten Ausführungsform kann die Temperiereinheit ein externes System sein.

Die Steuereinheit umfasst vorzugsweise einen Analog-Digital-Converter (ADC). Besonders bevorzugt umfasst die Steuereinheit mehrere ADC, welche jeweils einem Stromverstärker zugeordnet sind, sodass eine hohe Messgeschwindigkeit erreicht wird. Wird ein elektrischer Multiplexer im Messmodul verwendet, werden weniger ADC im Messmodul benötigt, sodass die Herstellungskosten reduziert werden. In einer Ausführungsform umfasst das Messmodul lediglich einen ADC der mittels eines Multiplexers Signale mehrerer mit dem Multiplexer verbundener Stromverstärker wandelt.

Weitere Vorteile, Einzelheiten und Abwandlungen der Erfindung ergeben sich aus der nachfolgenden Beschreibung bevorzugter Ausführungsformen, unter Bezugnahme auf die Zeichnung. Es zeigen:

Fig. 1    eine vereinfachte Darstellung des prinzipiellen Aufbaus einer erfindungsgemäßen Messvorrichtung;

Fig. 2    eine vereinfachte Darstellung einer ersten Ausführungsform eines Messmoduls der Messvorrichtung;

Fig. 3    eine vereinfachte Darstellung einer zweiten Ausführungsform des Messmoduls der Messvorrichtung.

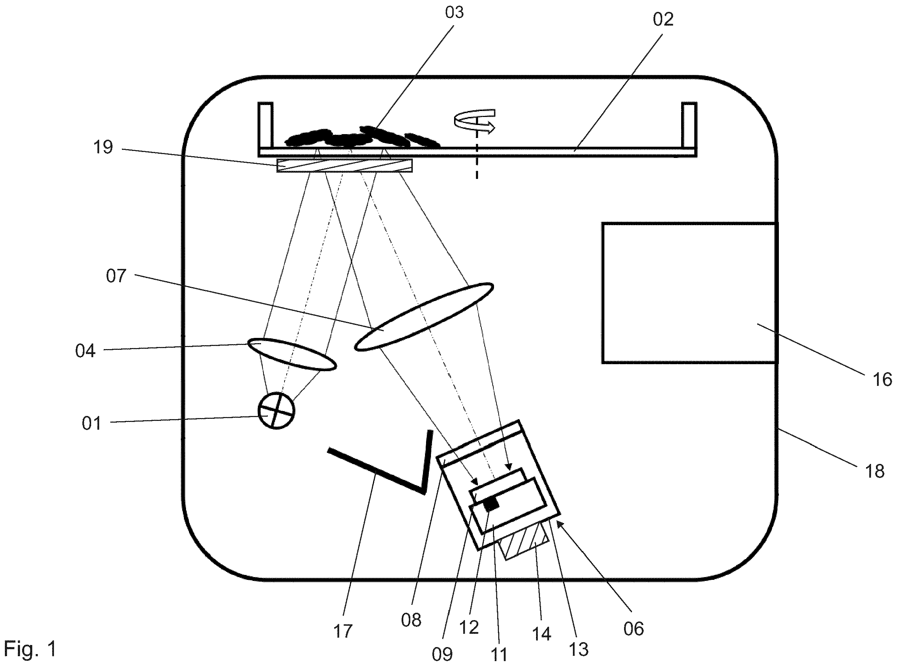

Fig. 1 zeigt eine vereinfachte Darstellung des prinzipiellen Aufbaus einer erfindungsgemäßen spektroskopischen Messvorrichtung, die konfiguriert ist, um ein erfindungsgemäßes Verfahren zur Vorkalibrierung bzw. ein Verfahren zur Korrektur von Messfehlern, welche durch Temperaturdrift und/oder Bauteilverschleiß an der Messvorrichtung auftreten können, auszuführen.

Die Messvorrichtung umfasst eine Lichtquelle 01, in deren emittierten Strahlengang ein Probenhalter 02 angeordnet ist. Die Lichtquelle 01 weist bevorzugt ein Spektrum im Infrarotbereich auf. Der Probenhalter 02 ist transparent, um eine Achse rotierbar und zylinder- oder topfförmig ausgebildet, wobei eine Zylinderseite offen und die gegenüberliegende Zylinderseite geschlossen ausgebildet ist. Auf dem Probenhalter 02 ist eine zu messende Probe 03, beispielsweise ein landwirtschaftliches Erzeugnis befindlich, wobei die Schwerkraft die Probe 03 auf dem Probenhalter 02 hält. Die Probe 03 liegt gemeinsam mit dem Probenhalter 02 im Strahlengang der Lichtquelle 01. Die von der Lichtquelle 01 emittierte Strahlung wird mittels einer Beleuchtungsoptik 04 homogenisiert, wobei die Beleuchtungsoptik 04 zwischen der Lichtquelle 01 und dem Probenhalter 02 angeordnet ist.

Die emittierte Strahlung wird an der Probe 03 gestreut und die gestreute Strahlung trifft von der Probe 03 auf ein Messmodul 06, welches ebenfalls Bestandteil der Messvorrichtung ist. Zwischen dem Probenhalter 02 mit der Probe 03 und dem Messmodul 06 ist eine Abbildungsoptik 07 zum Homogenisieren der gestreuten Strahlung angeordnet.

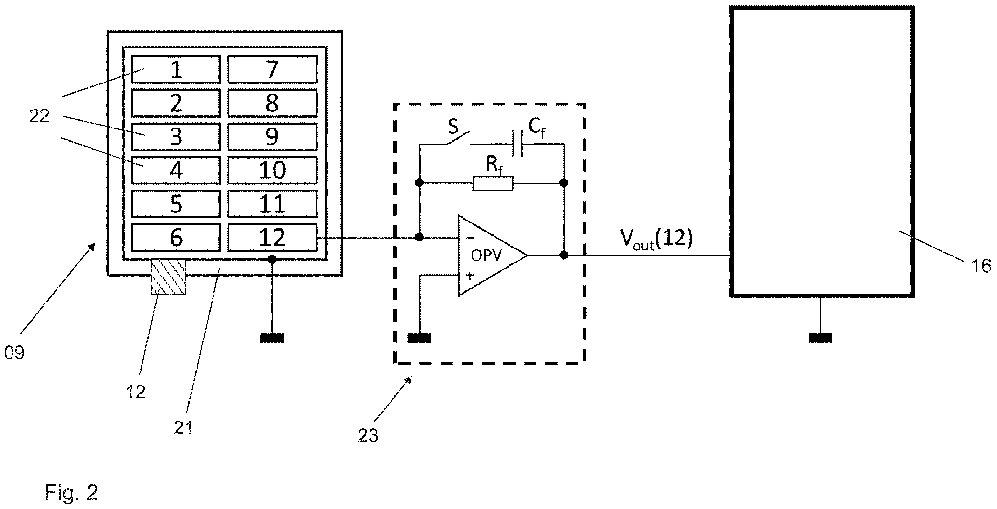

Das Messmodul 06 umfasst einen Spektralfilter 08, der am Messmodul 06 strahleneingangsseitig angeordnet ist. Weiterhin umfasst das Messmodul 06 einen Photosensor 09, der aus einem Substrat mit mehreren darauf angeordneten organischen Photodioden besteht (vgl. Fig. 2). Das Substrat kann einstückig sein und alle organischen Photodioden tragen, oder mehrstückig für jeweils eine oder mehrere Photodioden ausgestaltet sein. Der Photosensor 09 dient der Erfassung bzw. Messung der von der Probe 03 gestreuten Strahlung. Um am Photosensor 09 entstehende Wärme abzuleiten, umfasst das Messmodul 06 weiterhin einen Thermokörper 11, der an den Photosensor 09 gekoppelt ist. Vorzugsweise unmittelbar an dem Photosensor 09 ist ein Temperatursensor 12 angeordnet, der alternativ auch am Thermokörper 11 angeordnet sein kann. Der Temperatursensor 12 erfasst die Temperatur der organischen Photodiode(n) (vgl. Fig. 2). Das Messmodul 06 ist von einer Abschirmung 13 umgeben, die gegen Umwelteinflüsse abschirmt und die Temperatur im Messmodul 06 stabil hält. In der Abschirmung 13 sind die Komponenten Spektralfilter 08, Photosensor 09, Temperatursensor 12 und Thermokörper 11 angeordnet. Außerhalb der Abschirmung 13 ist an dieser eine Temperiereinheit 14 angeordnet.

Weiterhin umfasst die Messvorrichtung eine Steuereinheit 16, an welche der erfasste Probenmesswert von dem Photosensor 09 gesendet wird. Beabstandet zu dem Messmodul 06 ist eine Strahlfalle 17 angeordnet, welche der Unterdrückung von Störstrahlung dient. Eine weitere Komponente der Messvorrichtung ist ein Gehäuse 18, welches alle genannten Komponenten der Messvorrichtung umgibt und diese vor äußeren Umwelteinflüssen schützt.

Weiterhin umfasst die Messvorrichtung eine einschwenkbare Referenzprobe 19, welche zwischen dem Probenhalter 02 mit der Probe 03 und der Lichtquelle 01 angeordnet ist, sodass die Referenzprobe 19 im eingeschwenkten Zustand im Strahlengang der Lichtquelle 01 liegt. Vorzugsweise liegt die Referenzprobe 19 auf einer Referenz-Messebene mit geringem Abstand zu dem Probenhalter 02. Die Referenzprobe 19 ist eine Dunkel-Referenzprobe und/oder eine Hell-Referenzprobe, welche dem Anwender als zertifizierte Proben zur Verfügung stehen.

Für das erfindungsgemäße Verfahren, welches mit der erfindungsgemäßen Messvorrichtung ausführbar ist, werden die jeweiligen Referenzproben 19, welche auch als interne Probe bezeichnet werden, in einem Verfahrensschritt als Dunkel-Referenzprobe ein- und ausgeschwenkt und in einem weiteren Verfahrensschritt als Hell-Referenzprobe ein- und ausgeschwenkt, wobei jeweils ein Referenzwert der an der jeweiligen Referenzprobe 19 gestreuten Strahlung durch den Photosensor 09 erfasst und in der Steuereinheit 16 gespeichert und/oder weiter verarbeitet wird.

In der Steuereinheit 16 sind außerdem aus einer Vorkalibrierung erfasste Kalibrierwerte und Referenzwerte hinterlegt, wobei die Kalibrierwerte in einem vorgelagerten Verfahrensabschnitt an einem Messort, an dem auch die Probe 03 positioniert wird, mittels Kalibrierproben (nicht gezeigt) erzeugt worden sind. Die Kalibrierproben können auch als externe Proben bezeichnet werden. Weiterhin ist in der Steuereinheit 16 eine Werte-Repräsentanz eines Dunkelstromsignals, welche während der Vorkalibrierung bestimmt wurde, hinterlegt.

Die Steuereinheit 16 führt mittels der erfassten Kalibrierwerte, Referenzwerte und dem Dunkelstromsignal aus der Vorkalibrierung, sowie des Hell-Referenzwertes und des Dunkel-Referenzwertes der Referenzproben 19, welche in weiteren Verfahrensschritten erfasst wurden, und der durch den Temperatursensor 12 erfassten Temperaturwerte eine Korrekturberechnung für den erfassten Spektralwert der Probe 03 durch. Somit wird der erfasste Spektralwert der Probe 03 von Störungen, welche durch Temperatureinfluss und/oder Alterungsprozesse an den Komponenten der Messvorrichtung auftreten, befreit und ein exakter bzw. finaler Wert wird bestimmt. Ziel des erfindungsgemäßen Verfahrens ist es, während der Messungen im Betriebszustand eine hochgenaue Temperaturregelung am Photosensor überflüssig zu machen, indem durch durchgeführte Kalibrier- und Referenzmessungen und durch kontinuierliche Temperaturerfassung aktuelle Messwerte korrigiert werden.

Der nach der Korrektur des erfassten Spektralwerts ermittelte finale Wert ist ein störungsfreier, finaler Spektralwert bzw. ein finales Spektrum. Dieser finale Wert wird für jede organische Photodiode (vgl. Fig. 2), welche jeweils einen Spektralkanal bildet, ermittelt. Zur Berechnung des jeweiligen Wertes des finalen Spektrums werden vorzugsweise sechs Messgrößen miteinander verrechnet. Die Messgrößen werden anhand der zuvor beschriebenen Verfahrensschritte bestimmt. Weiterhin werden die Reflektivität der Hell-Referenzprobe (interne Hell-Probe) und der Hell-Kalibrierprobe (externe Hell-Probe) als bekannt vorausgesetzt. Insbesondere beträgt die Reflektivität der Hell-Referenzprobe und der Hell-Kalibrierprobe regelmäßig etwa 99%.

Nachfolgend wird beispielhaft eine solche Korrekturberechnung näher beschrieben:

Die Funktion zur Korrekturberechnung baut auf bekannten und zu bestimmenden Rohsignalen auf. Durch einmalige Messung, bevorzugt während der Vorkalibrierung, wird in einem Verfahrensschritt das Dunkelstromsignal DS(T) als ein Rohsignal bestimmt. Vier weitere Rohsignale werden während der Verfahrensschritte der Vorkalibrierung bei jeweils einer erfassten Temperatur T ermittelt, nämlich der Dunkel-Referenzwert iDR(T,LQ), der Hell-Referenzwert iHR(T,LQ), der Dunkel-Kalibrierwert eDR(T,LQ) und der Hell-Kalibrierwert eHR(T,LQ). In einem Schritt wird bei einer erfassten Temperatur T während der Probenmessung ein Spektralwert der zu messenden Probe ePM(T,LQ) erfasst, welcher ein externer Spektralwert ist (LQ steht für die Abhängigkeit von der Intensität der Lichtquelle für den zugeordneten Wellenlängenbereich).

Es werden die Reflektivitäten $R_{iDR}$ des Dunkel-Referenzwertes iDR(T,LQ) und $R_{eDR}$ des Dunkel-Kalibrierwertes eDR(T,LQ) aus der Reflexion und dem Streulicht der Lichtquelle an der Dunkel-Referenzprobe bzw. der Dunkel-Kalibrierprobe durch den Photosensor bestimmt. Die Reflektivitäten $R_{iHR}$ des Hell-Referenzwertes iHR(T,LQ) und $R_{eHR}$ des Hell-Kalibrierwertes eHR(T,LQ) können als bekannt angesehen werden, wobei sie etwa 99% betragen. Die gesuchte Größe ist die tatsächliche Reflektivität $R_{ePM}$ der zu messenden Probe, welche am Messort angeordnet ist. Weiterhin wird ein Hellsignal HS(T,LQ) bestimmt, wobei f(T,LQ) oder f(EQE,LQ) gilt (EQE ist die Quanteneffizienz).

Nachfolgend werden Gleichungen zur Bestimmung des Dunkel-Referenzwertes iDR(T,LQ), des Hell-Referenzwertes iHR(T,LQ), des Dunkel-Kalibrierwertes eDR(T,LQ) und des Hell-Kalibrierwertes eHR(T,LQ) sowie des Spektralwertes der zu messenden Probe ePM(T,LQ) aufgelistet, wobei i für intern und e für extern steht.

$$iDR(T,LQ)=DS(T)+iHS(T,LQ)*R_{iDR}$$

$$iHR(T,LQ)=DS(T)+iHS(T,LQ)*R_{iHR}$$

$$eDR(T,LQ)=DS(T)+eHS(T,LQ)*R_{eDR}$$

$$eHR(T,LQ)=DS(T)+eHS(T,LQ)*(R_{eHR}+R_{eDR})$$

$$ePM(T,LQ)=DS(T)+eHS(T,LQ)*(R_{ePM}+R_{eDR})$$

Somit stehen zur Korrekturberechnung fünf Geleichungen zur Verfügung, welche fünf Unbekannte enthalten, nämlich das interne Hellsignal iHS(T,LQ), das externe Hellsignal eHS(T,LQ), die Reflektivität $R_{iDR}$ des Dunkel-Referenzwertes, die Reflektivität des Dunkel-Kalibrierwertes $R_{eDR}$ und die Reflektivität der zu messenden Probe $R_{ePM}$. Die Reflektivität der zu messenden Probe $R_{ePM}$ ist der gesuchte Wert.

Dem Fachmann ist bekannt, wie ein Wert bestimmt wird, für den fünf Gleichungen mit fünf Unbekannten gelten. Durch Umstellen und Einsetzen der Gleichungen ergeben sich für die unbekannten Größen nachfolgende Formulierungen:

Für das interne Hellsignal iHS(T,LQ) gilt:

$$iHS(T,LQ)=[iHR(T,LQ)-DS(T)]/R_{iHR}$$

Für die Reflektivität $R_{iDR}$ des Dunkel-Referenzwertes gilt:

$$R_{iDR}=[iDR(T,LQ)-DS(T)]/iHS(T,LQ)$$

Für das externe Hellsignal eHS(T,LQ) gilt:

$$eHS(T,LQ)=[eHR(T,LQ)-eDR(T,LQ)]/R_{eHR}$$
$$=[b*iHR(T,LQ)-a*iDR(T,LQ)]/R_{eHR}$$

Für die Reflektivität des Dunkel-Kalibrierwertes $R_{eDR}$ gilt:

$$R_{eDR}=[eDR(T,LQ)-DS(T)]/eHS(T,LQ)=[a*iDR(T,LQ)-DS(T)]/eHS(T,LQ)$$

Für die Reflektivität der zu messenden Probe $R_{ePM}$ gilt:

$$R_{ePM} = [ePM(T,LQ) - DS(T)] / eHS(T,LQ) - R_{eDR}$$

Für die Variable a gilt in Abhängigkeit von der Temperatur:

$$a(T) = eDR(T_{Rampe}, LQ_{initial}) / iDR(T_{Rampe}, LQ_{initial})$$

Für die Variable b gilt in Abhängigkeit von der Temperatur:

$$b(T) = eHR(T_{Rampe}, LQ_{initial}) / iHR(T_{Rampe}, LQ_{initial})$$

Die Variablen a(T) und b(T) sind unabhängig von LQ, d.h. sie berücksichtigen die aktuellen LQ-Schwankungen.
Es wird angenommen, dass die Temperaturabhängigkeit von a(T) und b(T) für eDR und iDR bzw. eHR und iHR gleich sind, und sie somit anhand einer einmaligen Messung entlang einer Temperaturrampe (schrittweise Änderung der Temperatur mit schrittweiser Messung der jeweiligen Variablen) als a(T_{Rampe}) und b(T_{Rampe}) ermittelt werden. Die ermittelten Werte a(T_{Rampe}) und b(T_{Rampe}) werden bevorzugt in der Steuereinheit hinterlegt, insbesondere als look-up-table.
Die korrigierte Reflektivität der zu messenden Probe R_{ePM} repräsentiert das gesuchte finale Spektrum.
Fig. 2 zeigt eine vereinfachte Darstellung einer ersten Ausführungsform des Messmoduls 06 der Messvorrichtung. Symbolisch dargestellt ist der Photosensor 09 mit den auf dem Substrat 21 angeordneten organischen Photodioden 22. Auf dem Substrat 21, welches eine hohe Wärmeleitfähigkeit aufweist, sind in zwei Reihen insgesamt zwölf organische Photodioden 22 angeordnet. Jede organische Photodiode 22 stellt ein Sensorpixel dar. Der Photosensor 09 ist auf dem Thermokörper 11 angeordnet. An dem Photosensor 09 ist der Temperatursensor 12 angebracht. Die organischen Photodioden 22 sind mit einem Stromverstärker 23 gekoppelt, welcher wiederum mit der Steuereinheit 16 verbunden ist.

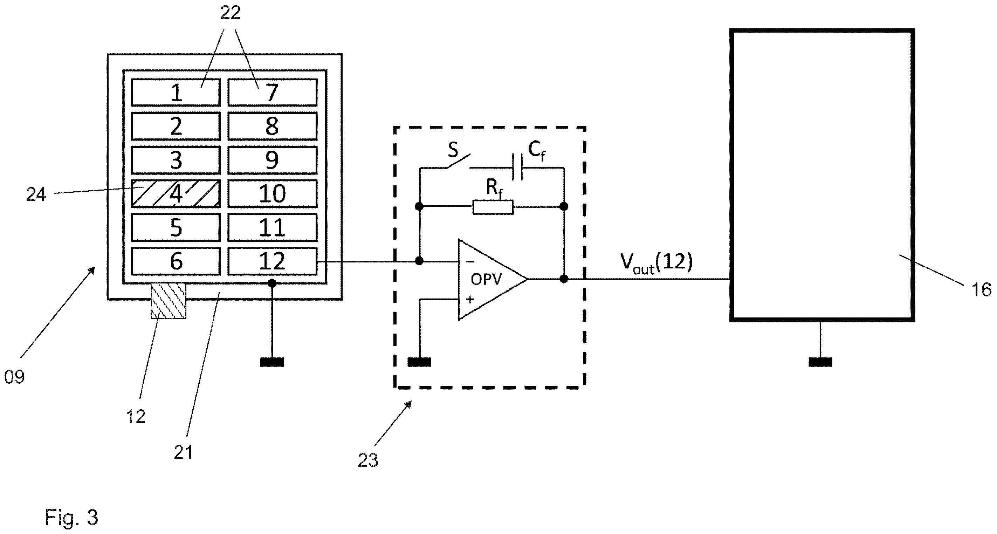

Fig. 3 zeigt eine vereinfachte Darstellung einer zweiten Ausführungsform des Messmoduls der Messvorrichtung, wobei Fig. 3 zunächst der in Fig. 2 gezeigten Ausführungsform gleicht. Abweichend zu Fig. 2 zeigt Fig. 3 eine abgedeckte organische Photodiode 24, welche als Dunkel-Referenz dient, sodass ein Dunkel-Referenzsignal für die Photodiode erfasst werden kann. Dieses Dunkel-Referenzsignal kann unter der Annahme, dass alle organischen Photodioden 22 den gleichen temperaturabhängigen Dunkelstrom aufweisen, für alle Photodioden 22 angenommen werden. Die Abdeckung ist so gewählt, dass keine Strahlung an der abgedeckten organischen Photodiode 24 ankommt.

### Bezugzeichen

| | |
|---|---|
| 01 | Lichtquelle |
| 02 | Probenhalter |
| 03 | Probe |
| 04 | Beleuchtungsoptik |
| 05 | - |
| 06 | Messmodul |
| 07 | Abbildungsoptik |
| 08 | Spektralfilter |
| 09 | Photosensor |
| 10 | - |
| 11 | Thermokörper |
| 12 | Temperatursensor |
| 13 | Abschirmung |
| 14 | Temperiereinheit |
| 15 | - |
| 16 | Steuereinheit |
| 17 | Strahlfalle |
| 18 | Gehäuse |
| 19 | Referenzprobe |
| 20 | - |
| 21 | Substrat |
| 22 | organische Photodiode |

23    Stromverstärker
24    abgedeckte organische Photodiode

**Patentansprüche**

1.  Verfahren zur Vorkalibrierung einer spektroskopischen Messvorrichtung, wobei die Messvorrichtung besitzt:

    • eine Steuereinheit (16),
    • eine Lichtquelle (01),
    • einen im Strahlengang der Lichtquelle (01) angeordneten Probenhalter (02), der einen Messort definiert,
    • ein spektrales Messmodul (06), welches einen Photosensor (09) mit mehreren auf einem Substrat (21) angeordneten organischen Photodioden (22) und mit einem Temperatursensor (12) besitzt,

    wobei Kalibrierwerte an dem Messort und Referenzwerte in einer Referenz-Messebene im Strahlengang der Lichtquelle (01) bestimmt werden, wobei der Temperatursensor Temperaturwerte in unmittelbarer Nähe der organischen Photodioden erfasst, und wobei das Verfahren folgende Schritte umfasst:

    i.) Anordnen einer Hell-Kalibrierprobe mit hoher Reflektivität am Messort, und Bestimmung eines Hell-Kalibrierwertes durch Messen einer abgelenkten Strahlung mittels des Photosensors (09);
    ii.) Anordnen einer Dunkel-Kalibrierprobe mit geringer Reflektivität am Messort, und Bestimmung eines Dunkel-Kalibrierwertes durch Messen einer abgelenkten Strahlung mittels des Photosensors (09);
    iii.) Anordnen einer Hell-Referenzprobe (19) mit hoher Reflektivität in der Referenz-Messebene, und Bestimmung eines Hell-Referenzwertes durch Messen einer abgelenkten Strahlung mittels des Photosensors (09);
    iv.) Anordnen einer Dunkel-Referenzprobe (19) mit geringer Reflektivität in der Referenz-Messebene, und Bestimmung eines Dunkel-Referenzwertes durch Messen einer abgelenkten Strahlung mittels Photosensors (09);
    v.) Erfassen eines Dunkelstromsignals bei ausgeschalteter Lichtquelle;
    vi.) Wiederholen der Schritte i. bis v. bei verschiedenen Temperaturen entlang einer vorbestimmten Temperaturkurve, wobei bei jedem Temperaturwert jeweils die Temperatur sowie ein Hell-Referenzwert, ein Hell-Kalibrierwert, ein Dunkel-Referenzwert, ein Dunkel-Kalibrierwert und ein Dunkelstromsignal erfasst werden; und
    vii.) Speichern der bestimmten Kalibrier- und Referenzwerte sowie der zugehörigen Temperaturwerte in der Steuereinheit (16).

2.  Verfahren zur Korrektur von Messfehlern, welche durch Temperaturdrift und/oder Bauteilverschleiß an einer spektroskopischen Messvorrichtung auftreten, wobei die Messvorrichtung eine Steuereinheit (16), eine Lichtquelle (01), einen im Strahlengang der Lichtquelle (01) angeordneten Probenhalter (02), der einen Messort definiert, sowie ein spektrales Messmodul (06) umfasst, wobei das Messmodul einen Photosensor (09) mit auf einem Substrat (21) angeordneten mehreren organischen Photodioden (22) und einen am Photosensor (09) angeordneten Temperatursensor (12) besitzt, **dadurch gekennzeichnet, dass** bei einer Probenmessung folgende Schritte ausgeführt werden:

    - Erfassung der Ist-Temperatur am Photosensor (09) mittels des Temperatursensors (12);
    - Einschwenken einer Dunkel-Referenzprobe (19) in den Strahlengang der Lichtquelle (01), sodass die Dunkel-Referenzprobe (19) in einer Referenz-Messebene liegt, und Messen eines Dunkel-Referenzwertes mittels des Photosensors (09);
    - Einschwenken einer Hell-Referenzprobe (19) in den Strahlengang der Lichtquelle (01), sodass die Hell-Referenzprobe (19) in der Referenz-Messebene liegt, und Messen eines Hell-Referenzwertes mittels des Photosensors (09);
    - Anordnen einer zu untersuchenden Probe (03) auf dem Probenhalter (02), sodass diese an einem Messort, versetzt zur Referenz-Messebene, liegt und Messen eines Spektralwertes der Probe (03) mittels des Photosensors (09); und
    - Korrektur des erfassten Spektralwertes der Probe (03) mittels einer Korrekturberechnung durch die Steuereinheit (16) unter Verwendung von bei einer Vorkalibrierung gemäß Anspruch 1 gewonnenen Kalibrier- und Referenzwerten, dem gemessenen Dunkel-Referenzwert, dem Hell-Referenzwert und der erfassten Ist-Temperatur.

3.  Verfahren nach Anspruch 2, **dadurch gekennzeichnet, dass** in der Steuereinheit (16) eine die Kalibrier- und Referenzwerte repräsentierende Funktion zur Durchführung der Korrekturberechnung bestimmt und hinterlegt wird.

# EP 4 296 636 B1

4. Messvorrichtung zur spektroskopischen Inhaltsstoffanalyse umfassend ein Gehäuse (18), in welchem eine Steuereinheit (16), eine Lichtquelle (01), ein Probenhalter (02) im Strahlengang der Lichtquelle (01), sowie ein spektrales Messmodul (06) angeordnet sind, wobei das Messmodul (06) mindestens einen Photosensor (09) mit mehreren auf einem Substrat (21) angeordneten organischen Photodioden (22) und einen am Photosensor (09) angeordneten Temperatursensor (12) besitzt, wobei die Messvorrichtung dazu ausgebildet ist, um das Verfahren zur Korrektur von Messfehlern gemäß einem der Ansprüche 2 bis 3 auszuführen.

5. Messvorrichtung nach Anspruch 4, **dadurch gekennzeichnet, dass** die Lichtquelle (01) eine Strahlung im Infrarotbereich und/oder sichtbaren Bereich und/oder ultravioletten Bereich emittiert.

6. Messvorrichtung nach Anspruch 4 oder 5, **dadurch gekennzeichnet, dass** sie weiterhin mindestens eine im Strahlengang angeordnete Optik (04; 07) umfasst.

7. Messvorrichtung nach einem der Ansprüche 4 bis 6, **dadurch gekennzeichnet, dass** das Messmodul weiterhin einen Thermokörper (11) umfasst, der an dem Photosensor (09) angeordnet ist.

8. Messvorrichtung nach einem der Ansprüche 4 bis 7, **dadurch gekennzeichnet, dass** an dem Messmodul (06) ein Spektralfilter (08), welcher im Strahlengang liegt, angeordnet ist.

9. Messvorrichtung nach einem der Ansprüche 4 bis 8, **dadurch gekennzeichnet, dass** der Photosensor (09) 2 bis 2000 organische Photodioden (22), alternativ 3 bis 200 Photodioden (22), besonders bevorzugt 4 bis 100 Photodioden (22) umfasst.

## Claims

1. Method for pre-calibrating a spectroscopic measurement device, the measurement device having:

   - a control unit (16),
   - a light source (01),
   - a sample holder (02) arranged in the beam path of the light source (01) and defining a measurement location,
   - a spectral measurement module (06) which has a photosensor (09) with a plurality of organic photodiodes (22) arranged on a substrate (21) and with a temperature sensor (12),

   calibration values being determined at the measurement location and reference values being determined in a reference measurement plane in the beam path of the light source (01), the temperature sensor recording temperature values in the direct vicinity of the organic photodiodes, and the method comprising the following steps:

   i.) arranging a bright calibration sample having high reflectivity at the measurement location and determining a bright calibration value by measuring a deflected radiation by means of the photosensor (09);
   ii.) arranging a dark calibration sample having low reflectivity at the measurement location and determining a dark calibration value by measuring a deflected radiation by means of the photosensor (09);
   iii.) arranging a bright reference sample (19) having high reflectivity in the reference measurement plane and determining a bright reference value by measuring a deflected radiation by means of the photosensor (09);
   iv.) arranging a dark reference sample (19) having low reflectivity in the reference measurement plane and determining a dark reference value by measuring a deflected radiation by means of the photosensor (09);
   v.) recording a dark current signal when the light source is switched off;
   vi.) repeating steps i. to v. at different temperatures along a predetermined temperature curve, with the temperature and a bright reference value, a bright calibration value, a dark reference value, a dark calibration value, and a dark current signal being recorded for each temperature value; and
   vii.) storing the determined calibration and reference values and also the related temperature values in the control unit (16).

2. Method for correcting measurement errors which occur in a spectroscopic measurement device on account of temperature drift and/or component wear, the measurement device comprising a control unit (16), a light source (01), a sample holder (02) arranged in the beam path of the light source (01) and defining a measurement location, and a spectral measurement module (06), the measurement module having a photosensor (09) with a plurality of organic photodiodes (22) arranged on a substrate (21) and a temperature sensor (12) arranged at the photosensor (09), **characterized in that** the following steps are carried out during a sample measurement:

- detecting the actual temperature at the photosensor (09) by means of the temperature sensor (12);
- pivoting a dark reference sample (19) into the beam path of the light source (01) such that the dark reference sample (19) is located in a reference measurement plane, and measuring a dark reference value by means of the photosensor (09);
- pivoting a bright reference sample (19) into the beam path of the light source (01) such that the bright reference sample (19) is located in the reference measurement plane, and measuring a bright reference value by means of the photosensor (09);
- arranging a sample (03) to be examined on the sample holder (02) such that the said sample is located at a measurement location offset from the reference measurement plane, and measuring a spectral value of the sample (03) by means of the photosensor (09); and
- correcting the recorded spectral value of the sample (03) by means of a correction calculation by way of the control unit (16) using calibration and reference values obtained during a pre-calibration according to Claim 1, the measured dark reference value, the bright reference value and the detected actual temperature.

3. Method according to Claim 2, **characterized in that** a function representing the calibration values and reference values and serving to carry out the correction calculation is determined and stored in the control unit (16).

4. Measurement device for spectroscopic constituent analysis, comprising a housing (18), in which a control unit (16), a light source (01), a sample holder (02) in the beam path of the light source (01), and a spectral measurement module (06) are arranged, the measurement module (06) having at least one photosensor (09) with a plurality of organic photodiodes (22) arranged on a substrate (21) and a temperature sensor (12) arranged at the photosensor (09), the measurement device being designed to carry out the method for correcting measurement errors according to any of Claims 2 to 3.

5. Measurement device according to Claim 4, **characterized in that** the light source (01) emits a radiation in the infrared range and/or visible range and/or ultraviolet range.

6. Measurement device according to Claim 4 or 5, **characterized in that** the said measurement device furthermore comprises at least one optical unit (04; 07) arranged in the beam path.

7. Measurement device according to any of Claims 4 to 6, **characterized in that** the measurement module furthermore comprises a thermal body (11) arranged at the photosensor (09).

8. Measurement device according to any of Claims 4 to 7, **characterized in that** a spectral filter (08) located in the beam path is arranged at the measurement module (06).

9. Measurement device according to any of Claims 4 to 8, **characterized in that** the photosensor (09) comprises 2 to 2000 organic photodiodes (22), alternatively 3 to 200 photodiodes (22), particularly preferably 4 to 100 photodiodes (22).

**Revendications**

1. Procédé de pré-étalonnage d'un dispositif de mesure spectroscopique, le dispositif de mesure possédant :

• une unité de commande (16),
• une source lumineuse (01),
• un porte-échantillon (02) qui est disposé sur le chemin de rayonnement de la source lumineuse (01) et qui définit un emplacement de mesure,
• un module de mesure spectrale (06), qui possède un photocapteur (09) comprenant plusieurs photodiodes organiques (22) disposées sur un substrat (21) et un capteur de température (12),

des valeurs d'étalonnage étant déterminées à l'emplacement de mesure et des valeurs de référence étant déterminées dans un plan de mesure de référence sur le chemin de rayonnement de la source lumineuse (01), le capteur de température détectant des valeurs de température à proximité immédiate des photodiodes organiques, et le procédé comprenant les étapes suivantes :

i.) agencement d'un échantillon d'étalonnage clair de réflectivité élevée à l'emplacement de mesure, et détermination d'une valeur d'étalonnage claire par mesure d'un rayonnement dévié au moyen du photocapteur (09) ;

ii.) agencement d'un échantillon d'étalonnage foncé de faible réflectivité à l'emplacement de mesure, et détermination d'une valeur d'étalonnage foncée par mesure d'un rayonnement dévié au moyen du photocapteur (09) ;

iii.) agencement d'un échantillon de référence clair (19) de réflectivité élevée dans le plan de mesure de référence, et détermination d'une valeur de référence claire par mesure d'un rayonnement dévié au moyen du photocapteur (09) ;

iv.) agencement d'un échantillon de référence foncé (19) de faible réflectivité dans le plan de mesure de référence, et détermination d'une valeur de référence foncée par mesure d'un rayonnement dévié au moyen du photocapteur (09) ;

v.) acquisition d'un signal de courant d'obscurité lorsque la source lumineuse est éteinte ;

vi.) répétition des étapes i. à v. à différentes températures le long d'une courbe de température prédéterminée, la température ainsi qu'une valeur de référence claire, une valeur d'étalonnage claire, une valeur de référence foncée, une valeur d'étalonnage foncée et un signal de courant d'obscurité étant respectivement détectés pour chaque valeur de température ; et

vii.) stockage des valeurs d'étalonnage et de référence déterminées et des valeurs de température correspondantes dans l'unité de commande (16).

2. Procédé de correction d'erreurs de mesure qui se produisent sur un dispositif de mesure spectroscopique en raison de la dérive de température et/ou de l'usure des composants, le dispositif de mesure comprenant une unité de commande (16), une source lumineuse (01), un porte-échantillon (02) qui est disposé sur le chemin de rayonnement de la source lumineuse (01) et qui définit un emplacement de mesure, ainsi qu'un module de mesure spectrale (06), le module de mesure possédant un photocapteur (09) comprenant plusieurs photodiodes organiques (22) disposées sur un substrat (21) et un capteur de température (12) disposé sur le photocapteur (09), **caractérisé en ce que** les étapes suivantes sont exécutées lors d'une mesure d'échantillon :

- détection de la température réelle sur le photocapteur (09) au moyen du capteur de température (12) ;
- pivotement d'un échantillon de référence foncé (19) dans le chemin de rayonnement de la source lumineuse (01), de telle sorte que l'échantillon de référence foncé (19) se trouve dans un plan de mesure de référence, et mesure d'une valeur de référence foncée au moyen du photocapteur (09) ;
- pivotement d'un échantillon de référence clair (19) dans le chemin de rayonnement de la source lumineuse (01), de telle sorte que l'échantillon de référence clair (19) se trouve dans le plan de mesure de référence, et mesure d'une valeur de référence claire au moyen du photocapteur (09) ;
- agencement d'un échantillon (03) à examiner sur le porte-échantillon (02) de telle sorte qu'il se situe à un emplacement de mesure décalé par rapport au plan de mesure de référence, et mesure d'une valeur spectrale de l'échantillon (03) au moyen du photocapteur (09) ; et
- correction de la valeur spectrale détectée de l'échantillon (03) au moyen d'un calcul de correction par l'unité de commande (16) en utilisant les valeurs d'étalonnage et de référence détectées lors d'un pré-étalonnage, selon la revendication 1, la valeur de référence foncée mesurée, la valeur de référence claire et la température réelle détectée.

3. Procédé selon la revendication 2, **caractérisé en ce qu'**une fonction représentant les valeurs d'étalonnage et de référence est déterminée et enregistrée dans l'unité de commande (16) pour l'exécution du calcul de correction.

4. Dispositif de mesure pour l'analyse spectroscopique de constituants, comprenant un boîtier (18) dans lequel sont disposés une unité de commande (16), une source lumineuse (01), un porte-échantillon (02) sur le chemin de rayonnement de la source lumineuse (01), et un module de mesure spectrale (06), le module de mesure (06) possédant au moins un photocapteur (09) comprenant plusieurs photodiodes organiques (22) disposées sur un substrat (21) et un capteur de température (12) disposé sur le photocapteur (09), le dispositif de mesure étant conçu pour mettre en œuvre le procédé de correction d'erreurs de mesure selon l'une quelconque des revendications 2 à 3.

5. Dispositif de mesure selon la revendication 4, **caractérisé en ce que** la source lumineuse (01) émet un rayonnement dans le domaine de l'infrarouge et/ou du visible et/ou de l'ultraviolet.

6. Dispositif de mesure selon la revendication 4 ou 5, **caractérisé en ce qu'**il comprend en outre au moins une optique (04 ; 07) disposée sur le chemin de rayonnement.

7. Dispositif de mesure selon l'une des revendications 4 à 6, **caractérisé en ce que** le module de mesure comprend en outre un corps thermique (11) qui est disposé sur le photocapteur (09).

8. Dispositif de mesure selon l'une des revendications 4 à 7, **caractérisé en ce qu'**un filtre spectral (08) situé sur le chemin de rayonnement est disposé sur le module de mesure (06).

9. Dispositif de mesure selon l'une des revendications 4 à 8, **caractérisé en ce que** le photocapteur (09) comprend de 2 à 2000 photodiodes organiques (22), en variante, de 3 à 200 photodiodes (22), et de manière particulièrement préférée, de 4 à 100 photodiodes (22).

Fig. 1

Fig. 2

EP 4 296 636 B1

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3152785 B1
- WO 2016055047 A1
- DE 102014014983 A1
- DE 102019102176 A1
- DE 102019113346 A1
- EP 3633352 A1
- DE 102004025448 A1
- WO 2019072729 A1
- EP 1740928 B1
- DE 102018103509 B3
- DE 102004021448 A1